# EUROPÄISCHE PATENTSCHRIFT

(11) **EP 1 526 989 B1**
(45) Veröffentlichungstag und Bekanntmachung des Hinweises auf die Patenterteilung: **31.05.2006**
(21) Anmeldenummer: 03717139.4
(22) Anmeldetag: 10.03.2003
(51) Int. Cl.: B60R 21/01, B62D 9/00

(54) **VERFAHREN UND VORRICHTUNG ZUR FAHRZEUGLENKUNG BEI EINER KOLLISION**
METHOD AND DEVICE FOR STEERING A VEHICLE IN CASE OF A COLLISION
PROCEDE ET DISPOSITIF POUR DIRIGER UN VEHICULE LORS D'UNE COLLISION

(30) Priorität: 24.07.2002 DE 10233575
(43) Veröffentlichungstag der Anmeldung: 04.05.2005
(73) Patentinhaber: ROBERT BOSCH GMBH, 70442 Stuttgart (DE)
(72) Erfinder: VERHAGEN, Armin-Maria, 71701 Schwieberdingen (DE); GERDES, Manfred, 71739 Oberriexingen (DE)
(86) Internationale Anmeldenummer: PCT/DE2003/000753
(87) Internationale Veröffentlichungsnummer: WO 2004/016477

(56) Entgegenhaltungen:
- EP-A- 0 649 776
- EP-A- 0 967 121
- WO-A-02/094618
- DE-A- 10 032 710
- DE-A- 10 049 905
- DE-A- 10 108 879
- DE-C- 4 400 547
- DE-C- 4 436 162

## Beschreibung

### Stand der Technik

Die Erfindung geht aus von einem Verfahren bzw. einer Vorrichtung zum Personenschutz bei einem Aufprall eines Objekts auf ein Fahrzeug nach der Gattung der unabhängigen Patentansprüche.

Aus dem Artikel in den VDI-Nachrichten vom 19.04.2002 von Peter Kudlicza, "Der Trick mit dem Knick", ist es bekannt, dass bei einem Aufprall der Aufprallort mittels Sensoren ermittelt wird, um dann insbesondere bei einem Frontalaufprall durch sich abknickende Räder eine Abgleitkollision zu ermöglichen. Dies bietet eine hohe Überlebenschance für Fahrzeuglenker. Durch die Abgleitkollision wird insbesondere ermöglicht, dass sich die Vorderräder der beiden kollidierenden Fahrzeuge sich nicht mehr verhaken können, sondern eben aneinander abgleiten. Dabei ist hier ein Umknickmechanismus für die Räder vorgesehen, der durch die Elektronik des Sicherheitssystems veranlasst wird.

Aus EP 967121A2 ist es bekannt, dass durch ein Brems- oder Lenkvorgang bei einer Unfallsituation eine optimale Geschwindigkeitsreduzierung und ein günstiger Aufprallwinkel des Fahrzeugs zum Aufprallobjekt erreicht wird. Auf diese Weise kann ein für die Insassen des Fahrzeugs kritischer Aufprallwinkel oder ein ungünstiger Offsetaufprall vermieden werden. Aus der älteren internationalen Patentanmeldung WO 02/094618A1 ist es bekannt, eine Abgleitkollision durch ein Einknicken der Räder durchzuführen, wobei das Einknicken der Räder mittels einer Energiequelle erreicht wird, die ein Hochdruckspeicher für ein geeignetes Fluid oder eine chemische bzw. pyrotechnische Energiequelle sein kann.

### Vorteile der Erfindung

Das erfindungsgemäße Verfahren bzw. die erfindungsgemäße Vorrichtung zum Personenschutz bei einem Aufprall eines Objekts auf ein Fahrzeug mit den Merkmalen der unabhängigen Patentansprüche hat demgegenüber den Vorteil, dass die aufwendige Konstruktionsänderung der Radaufhängung zur Realisierung des Einknickmechanismus entfällt und auch schon bei bestehenden Fahrzeugkonstruktionen dieser Schutzmechanismus hinzugefügt werden kann. Dazu ist lediglich notwendig, den Prozessor, der den Aufprallort bestimmt, mit dem Lenksystem zu verbinden. Dies kann in ein bestehendes Kommunikationssystem integriert werden. Es ist beispielsweise möglich, dass der Prozessor des Airbagsteuergeräts, der den Aufprallort bestimmt, bereits mit anderen Steuergeräten über einen Bus verbunden ist. Über diesen Bus kann dann der Stellbefehl zur Ermöglichung der Abgleitkollision an das Lenksystem übertragen werden. Dafür ist ggf. eine Priorisierung vorzusehen.

Durch die in den abhängigen Ansprüchen aufgeführten Maßnahmen und Weiterbildungen sind vorteilhafte Verbesserungen der in den unabhängigen Patentansprüchen angegebenen Vorrichtungen bzw. des Verfahrens möglich.

Besonders vorteilhaft ist, dass sich das Rad, dass sich auf der Seite befindet, an der sich der Aufprallort befindet, nach innen dreht, um die Abgleitkollision zu ermöglichen.

Weiterhin ist es von Vorteil, dass das Airbagsteuersystem über eine Kommunikationsweiche in ein bestehendes Kommunikationssystem, an dem das Lenksystem angeschlossen ist, eingebunden wird. Dies kann beispielsweise ein CAN-Bus, also ein Multimasterbus sein. Es ist jedoch auch möglich, eine zweite Radverbindung hier vorzusehen, die direkt zum Lenksystem führt. Anstatt eines CAN-Busses, also eines Multimasterbusses, sind jedoch auch andere Bussysteme möglich, die beispielsweise auch zeitgesteuert sind.

### Zeichnung

Ausführungsbeispiele der Erfindung sind in der Zeichnung dargestellt und werden in der nachfolgenden Beschreibung näher erläutert. Es zeigen
- Figur 1: ein Blockschaltbild der erfindungsgemäßen Vorrichtung und
- Figur 2: ein Flussdiagramm des erfindungsgemäßen Verfahrens.

### Beschreibung

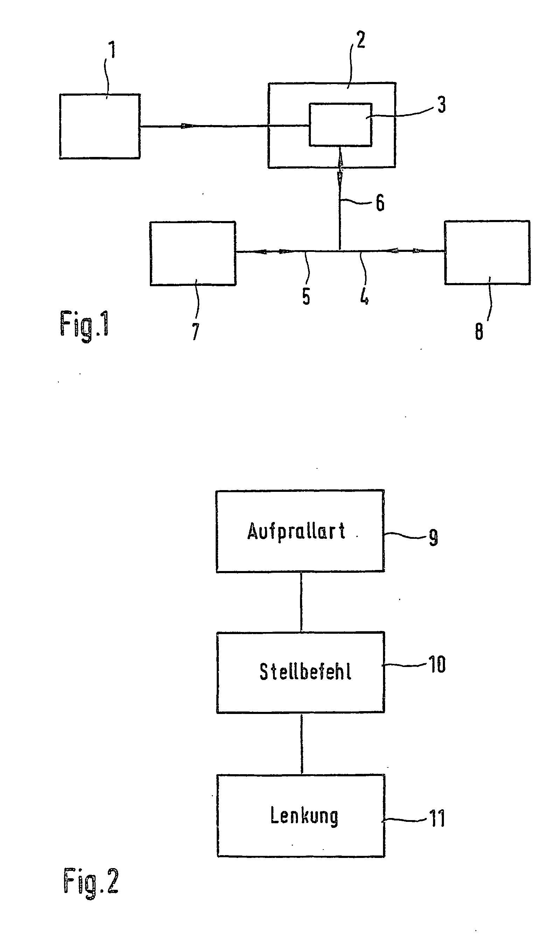

Figur 1 zeigt als Blockschaltbild die erfmdungsgemäße Vorrichtung. Ein Aufprallsensor 1 ist über eine Leitung mit einem Dateneingang eines Steuergeräts 2 verbunden und da insbesondere mit einem Prozessor 3, der im Steuergerät 2 angeordnet ist. Über einen Datenein- und -ausgang ist der Prozessor 3 mit einer Kommunikationsweiche 4 verbunden, die sich außerhalb des Steuergeräts 2 befindet. Diese Kommunikationsweiche 4 ermöglicht die Anbindung des Prozessors 3 an einen Fahrzeugbus 5. An dem Fahrzeugbus 5 sind über Datenein- und -ausgänge weiterhin ein Lenksystem 7 und ein ESP (elektronisches Stabilitätsprogramm) 8 angeschlossen.

Bei dem Aufprallsensor handelt es sich üblicherweise um einen Beschleunigungssensor, es sind jedoch auch Verformungssensoren, indirekte Verformungssensoren, wie die Temperatur- oder Drucksensoren und Umfeldsensoren wie Video, Radar oder Ultraschallsensoren möglich. Auch Kombinationen hiervon sind einsetzbar. Beispielhaft ist hier lediglich ein Aufprallsensor dargestellt, es können weit mehr als ein Aufprallsensor angeordnet sein. Zusätzlich oder anstatt kann der Aufprallsensor auch im Steuergerät 2 selbst angeordnet sein. Der Aufprallsensor 1 hat einen digitalen Ausgang, d.h. der Aufprallsensor 1 weist ein Sensierungselement, eine Signalaufbereitung mit Messverstärker, einen Analog-Digitalwandler und einen Senderbaustein auf, der den Sensorwert digital zum Steuergerät 2 und dabei insbesondere zum Prozessor 3 überträgt. Hier ist eine undirektionale Verbindung zwischen dem Sensor 1 und dem Steuergerät 2 vorgesehen, die einerseits zur Stromversorgung des Sensors 1 mittels eines Gleichstroms dient und andererseits die Datenübertragung der Sensorwerte über diese Leitung durch eine Modulation des Gleichstroms. Das Steuergerät 2 weist hier einen nicht dargestellten Empfangsbaustein auf, der die Daten des Sensors 1 aufnimmt. Alternativ ist es möglich, dass eine bidirektionale Schnittstelle zwischen dem Sensor 1 und dem Steuergerät oder gar ein Sensorbus vorgesehen ist.

Der Einbauort des Aufprallsensors 1 ist im ausgelagerten Fall einmal die Seite, beispielsweise die B-Säule, im Türschweller oder in der Tür selbst und bei sogenannten Upfrontsensoren am Kühler, um möglichst nahe am Aufprallort zu sein. Bei Verformungssensoren ist auch ein Einsatz in der Stoßstange oder anderen beim Aufprall zunächst verformten Fahrzeugteilen möglich. Umfeldsensoren sind außen am Fahrzeug angebracht, um eine Rundumsicht um das Fahrzeug zu ermöglichen. Insbesondere mit solchen Umfeldsensoren wir Radar, Ultraschall oder Video ist es möglich, dass erfindungsgemäße Verfahren bzw. die erfindungsgemäße Vorrichtung schon frühzeitig zur Ermöglichung einer Abgleitkollision zu konfigurieren. Durch Berechnung, dass eine Kollision sich nicht mehr vermeiden lässt, ist es möglich, das Rad in der Nähe des Aufprallortes vor den Aufprall bereits nach innen zu drehen, um hier Abgleitkollision zu ermöglichen.

Der Prozessor 3, der üblicherweise ein Mikrocontroller ist, aber auch ein normaler Mikroprozessor oder ein digitaler Signalprozessor sein kann, ist über die Leitung 6 mit der Kommunikationsweiche 4 verbunden. Die Kommunikationsweiche 4 ermöglicht die Anbindung an den Fahrzeugbus 5. Hier ist ein Multimasterbus, beispielsweise ein CAN-Bus vorgesehen, der einen Wettbewerb zum Senden über den Bus 5 vorsieht. Dieser Wettbewerb kann beispielsweise durch eine entsprechende Adressierung der einzelnen Busteilnehmer gesteuert sein. Beispielhaft sind hier das Lenksystem 7 und das ESP 8 an den Bus angeschlossen. Es ist jedoch möglich, noch weitere Fahrzeugsysteme an diesen Bus 5 anzuschließen. Alternativ ist es möglich, dass der Prozessor 3 auch direkt mit dem Lenksystem 7 verbunden ist. Es sind auch noch weitere Bussysteme möglich, wie beispielsweise ein zeitgesteuerter Bus, der feste Zeitschlitze vorgibt, in denen der Prozessor 3 an das Lenksystem 7 Daten übertragen kann.

Hier ist nun vorgesehen, dass in Abhängigkeit von dem Aufprallort der durch den Prozessor 3 mittels der Sensorsignale vom Aufprallsensor 1 ermittelt wird, ein Stellsignal durch den Prozessor 3 an das Lenksystem 7 übertragen wird, um das betreffende Rad bzw. Räder so zu drehen, dass eine Abgleitkollision mit dem Aufprallobjekt möglich wird. Dazu weist der Prozessor 3 entsprechende Softwaremodule auf, um den Stellbefehl zu berechnen und zu übertragen.

Figur 2 visualisiert das erfindungsgemäße Verfahren. Im Verfahrensschritt 9 ermittelt der Aufprallsensor 1 den Aufprallort, wobei der Prozessor 3 die entsprechende Auswertung durchführt. In Abhängigkeit davon erzeugt der Prozessor 3 in Verfahrensschritt 10 einen Stellbefehl für das Lenksystem 7. Dieser Stellbefehl wird dann über die Leitung 6, die Kommunikationsweiche 4 und den Bus 5 an das Lenksystem 7 übertragen. Das Lenksystem 7 führt dann gemäß diesem Stellbefehl eine Lenkung aus. Aufgrund der extrem hohen Stellgeschwindigkeiten bei aktiven Lenksystemen im Bereich von 100 bis 300 ms ist hier von einer effizienten Schutzwirkung auszugehen. Bei dem Lenksystem 7 handelt es sich um AFS (Active Front Steering) oder steer-by-wire-Systemen. AFS bezeichnet eine Ergänzung zur Vorderachslenkung, die durch einen Elektromotor und ein Überlagerungsgetriebe in der Lage ist, aktiv und ohne Einwirkung des Fahrers zusätzliche Lenkwinkel auf die Vorderräder zu geben.

Das erfindungsgemäße Verfahren bzw. die erfindungsgemäße Vorrichtung ermöglichten nun durch eine einfache Kopplung des Airbagsteuergeräts mit dem Lenksystem einen effizienten Schutz einer Person bei einem Frontalaufprall.

## Patentansprüche

1. Verfahren zum Personenschutz bei einem Aufprall eines Objekts bei einem Fahrzeug, wobei der Aufprallort am Fahrzeug erkannt wird und eine Abgleitkollision des Fahrzeugs mit dem Objekt eingeleitet wird, **dadurch gekennzeichnet, dass** in Abhängigkeit von dem Aufprallort ein Stellbefehl an ein aktives Lenksystem (7) des Fahrzeugs übermittelt wird, um die Abgleitkollision mittels eines Elektromotors in Verbindung mit einem Überlagerungsgetriebe oder mittels einem Steer-by-Wire-Stystem zu ermöglichen, wobei bei einem Frontalaufprall des Objekts auf das Fahrzeug ein Vorderrad des Fahrzeugs, das sich an der Seite befindet, an der sich der Aufprallort befindet, nach innen gedreht wird, um die Abgleitkollision zu ermöglichen.

2. Vorrichtung zum Personenschutz bei einem Aufprall eines Objekts auf ein Fahrzeug, wobei die Vorrichtung im Fahrzeug angeordnet ist, wobei die Vorrichtung wenigstens einen Aufprallsensor (1) zur Erkennung des Aufprallorts am Fahrzeug aufweist, wobei der Aufprallsensor (1) mit einem Prozessor (3) der Vorrichtung zur Bestimmung des Aufprallorts verbunden ist, wobei die Vorrichtung zur Einleitung einer Abgleitkollision konfiguriert ist, indem bei einem Frontalaufprall des Objekts auf das Fahrzeug ein Vorderrad des Fahrzeugs, das sich an der Seite befindet, an der sich der Aufprallort befindet, nach innen gedreht wird, um die Abgleitkollision zu ermöglichen, **dadurch gekennzeichnet, dass** der Prozessor (3) mit einem aktiven Lenksystem (7) der Vorrichtung zur Übermittlung eines Stellbefehls in Abhängigkeit eines Aufprallorts verbunden ist, wobei der Stellbefehl mittels eines Elektromotors in Verbindung mit einem Überlagerungsgetriebe oder mittels einem Steer-by-Wire-System die Abgleitkollision ermöglicht.

3. Vorrichtung nach Anspruch 2, **dadurch gekennzeichnet, dass** der Prozessor (3) in einem Airbagsteuergerät (2) angeordnet ist und die Verbindung mit dem Lenksystem (7) über einen Fahrzeugbus (5, 6) realisiert ist.

4. Vorrichtung nach Anspruch 2 oder 3, **dadurch gekennzeichnet, dass** der Prozessor (3) über eine Kommunikationsweiche (4) mit einem Kommunikationssystem (5) verbunden ist, an dass das Lenksystem (7) angeschlossen ist.

5. Vorrichtung nach Anspruch 3 oder 4, **dadurch gekennzeichnet, dass** der Fahrzeugbus (5) ein Multimasterbus ist.

## Claims

1. Method for protecting persons in the event of an impact of an object in a vehicle, with the impact location on the vehicle being detected and a sliding collision of the vehicle with the object being initiated, **characterized in that** an actuating instruction is transferred to an active steering system (7) of the vehicle as a function of the impact location in order to make possible the sliding collision by means of an electric motor in conjunction with a variable ratio planetary gear mechanism or by means of a steer-by-wire system, in which case when there is a head-on impact of the object against the vehicle a front wheel of the vehicle which is located on the side on which the impact location is located is turned inwards in order to make the sliding collision possible.

2. Device for protecting persons in the event of an impact of an object against a vehicle, the device being arranged in the vehicle, the device having at least one impact sensor (1) for detecting the impact location on the vehicle, the impact sensor (1) being connected to a processor (3) of the device for determining the impact location, the device being configured to initiate an sliding collision by virtue of the fact that when there is a head-on impact of the object against the vehicle a front wheel of the vehicle which is located on the side on which the impact location is located is turned inwards in order to make the sliding collision possible, **characterized in that** the processor (3) is connected to an active steering system (7) of the device for transferring an actuating instruction as a function of an impact location, the actuating instruction making the sliding collision possible by means of an electric motor in conjunction with a variable ratio planetary gear mechanism or by means of a steer-by-wire system.

3. Device according to Claim 2, **characterized in that** the processor (3) is arranged in an airbag control device (2), and the connection to the steering system (7) is implemented by means of a vehicle bus (5, 6).

4. Device according to Claim 2 or 3, **characterized in that** the processor (3) is connected via a communications filter (4) to a communication system (5) to which the steering system (7) is connected.

5. Device according to Claim 3 or 4, **characterized in that** the vehicle bus (5) is a multi-master bus.

## Revendications

1. Procédé de protection des personnes lors d'une collision d'un objet contre un véhicule, en identifiant le point d'impact sur le véhicule et en induisant une collision déviée du véhicule avec l'objet,
**caractérisé en ce qu'**
en fonction du point d'impact on transmet un ordre de réglage à un système de direction actif (7) du véhicule, afin de permettre la collision déviée au moyen d'un moteur électrique en liaison avec un réducteur différentiel ou au moyen d'un système « steer-by-wire », et en cas de collision frontale de l'objet contre le véhicule on tourne vers l'intérieur une roue avant du véhicule, qui se trouve du côté de l'emplacement de la collision afin de permettre la collision déviée.

2. Dispositif de protection des personnes lors d'une collision d'un objet contre un véhicule, le dispositif étant logé dans le véhicule et présentant au moins un capteur de collision (1) pour détecter le point d'impact sur le véhicule à l'aide d'un capteur de collision (1) relié à un processeur (3), le dispositif étant configuré pour induire une collision déviée dans le sens où lors d'une collision frontale de l'objet contre le véhicule une roue avant du véhicule, qui se trouve du côté de l'emplacement de la collision, est tournée vers l'intérieur afin de permettre la collision déviée,
**caractérisé en ce que**
le processeur (3) est relié à un système de direction actif (7) du dispositif pour déterminer en fonction du point d'impact, un ordre de réglage permettant la collision déviée au moyen d'un moteur électrique en liaison avec un réducteur différentiel ou au moyen d'un système « steer-by-wire ».

3. Dispositif selon la revendication 2,
**caractérisé en ce que**
le processeur (3) est logé dans un appareil de commande d'airbags (2) et la liaison avec le système de direction (7) est réalisée via un bus de véhicule (5, 6).

4. Dispositif selon la revendication 2 ou 3,
**caractérisé en ce que**
le processeur (3) est relié, via un aiguillage de communication (4), à un système de communication (5) auquel est raccordé le système de direction (7).

5. Dispositif selon la revendication 3 ou 4,
**caractérisé en ce que**
le bus du véhicule (5) est un bus multimaîtres.
